# EUROPEAN PATENT SPECIFICATION

(11) **EP 2 888 303 B1**
(45) Date of publication and mention of the grant of the patent: **21.10.2020**
(21) Application number: 13830247.6
(22) Date of filing: 22.08.2013
(51) Int. Cl.: C08G 18/28, C08G 18/12, C08G 18/76

(54) **SOLVENT FREE POLYURETHANE LAMINATING ADHESIVE WITH HIGH OXYGEN TRANSFER RATE**
LÖSUNGSMITTELFREIER POLYURETHANKASCHIERKLEBSTOFF MIT HOHER SAUERSTOFFÜBERGANGSGESCHWINDIGKEIT
ADHÉSIF DE CONTRE-COLLAGE À BASE DE POLYURÉTHANNE SANS SOLVANT À VITESSE DE TRANSFERT D'OXYGÈNE ÉLEVÉE

(30) Priority: 24.08.2012 US 201261692983 P
(43) Date of publication of application: 01.07.2015
(73) Proprietor: Ashland Licensing And Intellectual Property, LLC, Dublin, OH 43017 (US)
(72) Inventor: JOHNSON, Randy, Allen, Hilliard, OH 43026 (US); KING, Keith, Douglas, Westerville, OH 43081 (US); ALABAKOVSKA, Lubica, N., Hilliard, OH 43026 (US)
(74) Representative: Kutzenberger Wolff & Partner
(86) International application number: PCT/US2013/056177
(87) International publication number: WO 2014/031846

(56) References cited:
- EP-A1- 2 199 358
- WO-A1-2004/052956
- US-A- 4 264 743
- US-A1- 2006 269 758
- US-A1- 2010 297 427
- US-A1- 2011 265 932
- US-A1- 2012 128 991
- US-B1- 8 022 164
- US-B2- 6 833 044

## Description

### BACKGROUND OF THE INVENTION

### Field of the Invention

The invention concerns two component laminating adhesive compositions comprising at least one polyurethane prepolymer and at least one polyfunctional curative. The two component laminating adhesive composition is particularly suited for application to flexible films to make laminated packaging, particularly for application to flexible films with high oxygen transfer rate ("OTR").

### The Related Art

Flexible packaging has evolved to provide laminated packaging materials with intense and colorful graphics that can be buried and protected within the laminated structure. Typically two, three or four films are laminated together to produce a structure that possess the properties of each film incorporated into the flexible laminated material. Laminating adhesives are used in a wide variety of these flexible packaging applications. The lamination process, final package requirements and cost requirements are all important factors into determining the adhesive selection.

Two-component, reactive urethane adhesives provide adhesion, clarity, processing and product resistance suited for laminated flexible packaging. Also, such adhesives are available as essentially 100% solids material which provides environmental advantages, particularly because solid materials are solvent free. As such, these adhesives have been finding significant commercial success in many laminating packaging applications such as snack foods, meat and cheeses, coffee packaging, bottle labels and many others.

Certain two component solvent free laminating adhesives have some limitations that have prevented such adhesives from being universally used in flexible packaging processes and applications. For example, in certain applications, such as in packaging fresh produce, like prepared salad mixes, transfer of oxygen and other gasses through the packaging material is desired. Although films have been developed that provide adequate OTR for such applications, the selection of adhesive for use with those films can have an adverse effect on OTR by impairing the transfer of oxygen and other gasses through laminating packaging materials comprising these films. Thus, laminating adhesives that have no or little effect on OTR and/or have good OTR properties are highly desired for packaging applications where relatively higher OTR is desired.

EP 2 199 358 A1 relates to fiber reinforced plastic materials. WO 2004/052956 A1 relates to an aqueous polyurethane dispersion.

All parts and percentages set forth in this specification are on a weight-by-weight basis unless otherwise specified.

### SUMMARY OF THE INVENTION

The two component laminating adhesive composition comprises Part A prepolymer having at least one polyether polyol and Part B curative having at least one polyfunctional component, such as an isocyanate reactive material. The compositions are generally solvent free meaning that they comprise little or no solvent.

The two component laminating adhesive composition has little-to-no negative effect on oxygen transfer while maintaining a good balance of adhesive processing and application performance; for example good bonds, good clarity, easy processing with good stability, no odor and the like. The adhesive compositions are suited for use with flexible packaging materials to make laminated flexible packaging. Because the two component laminating adhesive composition has no or little affect on OTR and has good OTR properties, the two component laminating adhesive composition may be used in applications where at least one of the films in the laminated packaging material has high OTR characteristics because the adhesive will not affect the OTR of the films, such as by the adhesive having good OTR, and has other beneficial properties like clarity. For example, the two component laminating adhesive composition can be used as a laminating adhesive for making flexible laminating packaging materials for fresh produce, such as pre-prepared salads and other green leaf products.

### DETAILED DESCRIPTION OF THE INVENTION

The Part A prepolymer comprises at least one lower molecular weight polyether polyol and at least one higher molecular weight polyether polyol. The higher molecular weight polyether polyol has a molecular weight of at least 1,000 g/mol, preferably at least about 2,000 g/mol, higher than the molecular weight of lower molecular weight polyether polyol. The lower molecular weight polyether polyol includes polyether polyol having a molecular weight of 2,500 g/mol to 3,250 g/mol. The higher molecular weight polyether polyol includes polyether polyol having a molecular weight of at least about 4,000 g/mol or at least about 5,000 g/mol. For example, the higher molecular weight polyether polyol may have a molecular weight of greater than about 4,000 g/mol to about 15,000 g/mol, like greater than 6,000 g/mol to about 10,000 g/mol. Persons of ordinary skill in these arts, after reading this disclosure, will appreciate that all ranges and values for the molecular weight of the lower molecular weight polyol and the higher molecular weight polyol within the explicitly stated ranges above are contemplated and within the scope of the invention.

Examples of useful polyether polyols include polypropylene oxide, polypropylene glycol and combinations thereof. Polyether polyols available from Bayer Material Science, Pittsburgh, Pennsylvania, U.S.A. ("Bayer) under the trade names ARCOL® Polyol PPG 3025 (molecular weight 3,000) and ACCLAIM® Polyol 8200 N (molecular weight 8,000) may be used in the Part A prepolymer component.

Two component laminating adhesive comprising the combination of lower molecular weight polyol, such as ARCOL Polyol PPG 3025, and higher molecular weight polyol, such as ACCLAIM Polyol 8200, in the Part A prepolymer component, when combined with a Part B curative, provides a stable laminating adhesive product having acceptable adhesive performance and good OTR. Overall, the combination of lower molecular weight polyol and higher molecular weight polyol in the Part A prepolymer provides for improved oxygen transfer through the adhesive, together with an adhesive that has phase stability, coats well, provides good clarity and provides excellent adhesion performance for bonding flexible packaging material films together.

The Part A prepolymer component typically comprises other materials such as those usually found in the prepolymer part of two-component solvent free adhesives. The Part A prepolymer component typically comprises isocyanates, however, the content of isocyanate in the Part A prepolymer of the two component laminating adhesive described herein may be less than the amount of isocyanate typically found in the prepolymer part of conventional two part adhesives. Isocyanates useful in the Part A prepolymer of the invention include hexamethylene diisocyanate, toluene diisocyanate (TDI), diphenylmethane diisocyanate (MDI) (which is available commercially as MONDUR® MR from Bayer), allophonate-modified diphenylmethane diisocyanate (allophonate modified MDI which is commercially available as MONDUR MA from Bayer, like MONDUR MA 2300), m- and p-phenylene diisocyanates, bitolylene diisocyanate, cyclohexane diisocyanate (CHDI), bis-(isocyanatomethyl)cyclohexane (H₆XDI), dicyclohexylmethane diisocyanate (H₁₂MDI), dimer acid diisocyanate (DDI), trimethyl hexamethylene diisocyanate, lysine diisocyanate and its methyl ester, isophorone diisocyanate, methyl cyclohexane diisocyanate, 1,5-napthalene diisocyanate, xylylene and xylene diisocyanate and methyl derivatives thereof, polymethylene polyphenyl isocyanates, chlorophenylene-2,4-diisocyanate, polyphenylene diisocyanates available commercially as, for example, MONDUR MR or MONDUR MRS (both available from Bayer), isophorone diisocyanate (IPDI), hydrogenated methylene diphenyl isocyanate (HMDI), tetramethyl xylene diisocyanate (TMXDI), hexamethylene diisocyanate (HDI), or oligomer materials of these materials such as a trimer of IPDI, HDI or a biuret of HDI, and the like and combinations thereof.

The Part A prepolymer may comprise about 10% to about 30%, such as about 15% to about 30%, of the lower molecular polyether polyol, by total weight of the Part A prepolymer, about 30% to about 60%, such as about 30% to about 40%, of the higher molecular polyether polyol, by total weight of the Part A prepolymer, and about 40% to about 70%, such as about 40% to about 50%, isocyanate, by total weight of the Part A prepolymer, Persons of ordinary skill in these arts, after reading this disclosure, will appreciate that all ranges and values for the amount of the components of the Part A prepolymer within the explicitly stated ranges above are contemplated and within the scope of the invention. The Part A prepolymer may comprise, consist essentially of or consist of the lower molecular weight polyether polyol, higher molecular weight polyether polyol and isocyanate.

The Part B curative component of the two component laminating adhesive described herein may be any curative typically used in two component laminating adhesives, and typically comprises any components usually found in such curatives. The Part B curative of the two component laminating adhesive composition comprises an isocyanate reactive material, and may consist of or consist essentially of such material. Preferably, the Part B curative comprises polyether polyol, such as Poly G® 30-280 available from the Lonza Group Limited, Basel, Switzerland, which is a polyether triol. Isocyanate reactive material selected from the group consisting of polyhydroxyls, polythiols, polyamines, and the like, and combinations thereof may be used in the Part B curative of the two component laminating adhesive. The Part B curative may also comprise isocyanates and/or oligomers, including those mentioned above with respect to the prepolymer.

In addition to the above, other materials may be included in the two component laminating adhesive composition, in the Part A prepolymer, the Part B curative or both the Part A prepolymer and Part B curative. These materials include catalyst (to shorten cure time), polymerization control agents, inhibitors, antioxidants, wetting agents, adhesion promoters, fillers and the like.

The Part A prepolymer and Part B curative are combined to form a mixed adhesive formula. Typically the mixed adhesive formula comprises about 10% to about 25%, such as about 10% to about 15%, by weight of the mixed adhesive formula of the lower molecular weight polyether polyol; about 20% to about 40%, such as about 20% to about 30%, by weight of the mixed adhesive formula of the higher molecular weight polyether polyol; about 25% to about 50%, such as about 20% to about 30%, by weight of the mixed adhesive formula of isocyanate and about 20% to about 35%, such as about 20% to about 30%, by weight of the mixed adhesive formula of the Part B curative, for example the isocyanate reactive material, like the curative polyether polyol.

The two-component laminating adhesive described herein is applied with any type of substrates to create a laminated structure, and laminated structures made with or comprising the two-component laminating adhesive are within the scope of the invention, such as flexible laminated packaging materials, like packaging materials for fresh produce, such as pre-prepared salads and other green leaf products. The adhesive is compatible with any substrates, including, for example paper, aluminum foil, coated films, printed films, co-extruded films, polyester films, polyolefin based films, white polyolefin based films, polyamide based films and copolymer films. Suitable films include polyethylene terephthalate, polypropylene, such as biaxially oriented polypropylene ("BOPP"), polylactic acid and polyethylene. Laminated structures having the two-component laminating adhesive described herein comprise a first substrate and a second substrate and a cured adhesive layer, that is the dried residue of the two-component laminating adhesive as described above, bonding the first substrate to the second substrate.

### EXAMPLES

### Example 1

Part A prepolymer having the composition set forth in Table 1 was formulated. Note that the weight percentages set forth in Table 1 are by weight of the components of the Part A prepolymer. The prepolymer was made by charging both MDI resin and polyols described in Table 1 to a reactor and heating slowly to 60 °C. Reaction was complete within 1 to 2 hours as verified by measuring the free isocyanate content (%NCO). Theoretical was 9.4%NCO.

| **Table 1. Prepolymer of the invention** | | |
|---|---|---|
| Item | | wt% |
| A | Arcol PPG 3025 (Bayer); polyether polyol | 17.00 |
| B | Acclaim 8200 (Bayer); polyether polyol | 38.35 |
| C | Mondur MA 2300 (Bayer); MDI resin | 44.65 |
| | Total | 100.00 |

### Example 2

Part B curative having the composition set forth in Table 2 was formulated. Note that the weight percentage set forth in Table 2 is by weight of the components of the Part B curative.

| **Table 2. Curative of the invention** | | |
|---|---|---|
| Item | | curative wt% |
| D | Poly G 30-280 (Lonza Group Limited); polyether polyol | 100.00 |
| | Total | 100.00 |

### Example 3

Part A prepolymer of Example 1 and Part B curative of Example 2 were applied to make standard film-to-film lamination used in fresh produce packaging. Laminations were made by mixing 2.7 parts of Part A prepolymer of Example 1 with 1.0 parts of Part B curative of Example 2. The mixed adhesive formula (Part A and Part B combined as stated above) had the composition set forth in Table 3. Note that the weight percentages set forth in Table 3 are by weight of the components of the mixed adhesive formula. The mixed adhesive formula was applied via smooth roll onto clear film followed by nipping to secondary film. The lamination was allowed to fully cure.

After curing, the film-to-film laminations, i.e. the fresh produce laminations, were evaluated. Bond strength was evaluated by applying ASTM D1876-08 "Standard Test Method for Peel Resistance - Adhesives (T-Peel Test)" which is incorporated by reference herein in its entirety, except that the load at constant head speed set forth in Section 7.1 of that standard was run at 12 inches per minute instead of 10 inches per minute. The film-to-film laminations were also tested for OTR and haze. The results are set forth in Table 3.

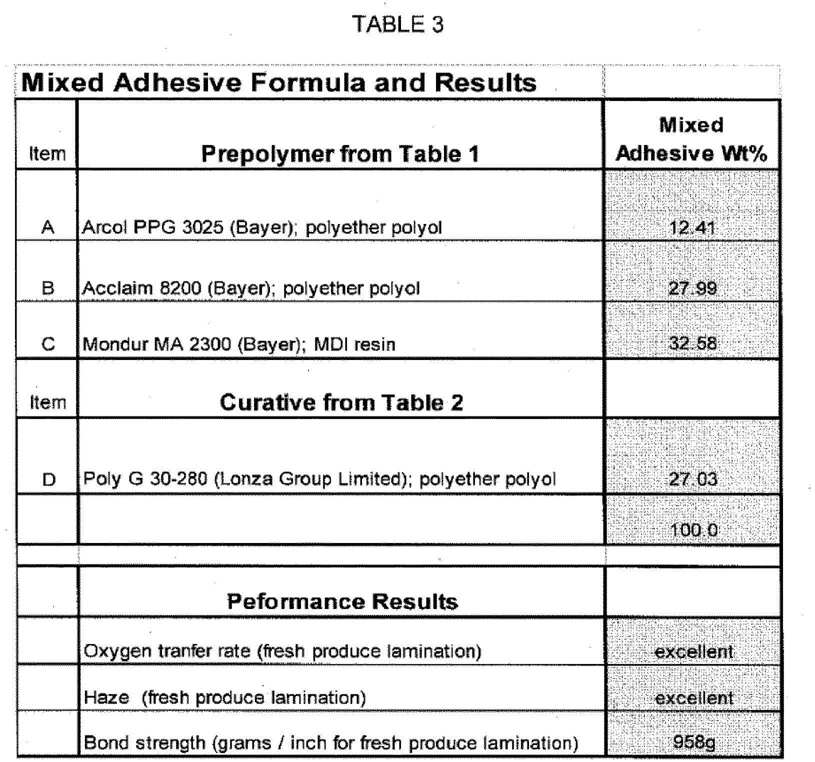

## Claims

1. A two component laminating adhesive comprising
(i) a prepolymer that comprises
- a lower molecular weight polyether polyol having a molecular weight between 2,500 g/mol to 3,250 g/mol and
- a higher molecular weight polyether polyol having a molecular weight at least 1,000 g/mol higher than the molecular weight of the lower molecular weight polyol and
(ii) a curative comprising an isocyanate reactive material,
wherein the adhesive does not comprise solvent

2. The adhesive of claim 1, wherein the molecular weight of the higher molecular weight polyol is at least 2,000 g/mol higher than the molecular weight of the lower molecular weight polyol.

3. The adhesive of claim 1, wherein the molecular weight of the lower molecular weight polyol is 3,000 g/mol or less and the molecular weight of the higher molecular weight polyol is at least 5,000 g/mol.

4. The adhesive of claim 1, wherein the polyether polyol is selected from the group consisting of polypropylene oxide, polypropylene glycol and combinations thereof.

5. The adhesive of claim 1, wherein the prepolymer further comprises isocyanate.

6. The adhesive of claim 5, wherein the isocyanate is selected from the group consisting of hexamethylene diisocyanate, toluene diisocyanate, diphenylmethane diisocyanate, allophonate-modified diphenylmethane diisocyanate, m- and p-phenylene diisocyanates, bitolylene diisocyanate, cyclohexane diisocyanate, bis-(isocyanatomethyl)cyclohexane, dicyclohexylmethane diisocyanate, dimer acid diisocyanate, trimethyl hexamethylene diisocyanate, lysine diisocyanate and its methyl ester, isophorone diisocyanate, methyl cyclohexane diisocyanate, 1,5-naphthalene diisocyanate, xylylene diisocyanate, xylene diisocyanate, methyl derivatives of xylylene diisocyanate, methyl derivatives of xylene diisocyanate, polymethylene polyphenyl isocyanate, chlorophenylene-2,4-diisocyanate, polyphenylene diisocyanate, isophorone diisocyanate, hydrogenated methylene diphenyl isocyanate (HMDI), tetramethyl xylene diisocyanate (TMXDI), hexamethylene diisocyanate (HDI), HDMI oligomer, TMXDI oligomer, HDI oligomer, biuret of HDI and combinations thereof.

7. The adhesive of claim 1, wherein the isocyanate reactive material is selected from the group consisting of a polyhydroxyl, a polythiol and a polyamine.

8. The adhesive of claim 1, wherein the isocyanate reactive material comprises a polyether polyol.

9. The adhesive of claim 8, wherein the polyether polyol is a polyether triol.

10. The adhesive of claim 1, wherein the curative further comprises an isocyanate.

11. The adhesive of claim 10, wherein the isocyanate is selected from the group consisting of hexamethylene diisocyanate, toluene diisocyanate, diphenylmethane diisocyanate, allophonate-modified diphenylmethane diisocyanate, m- and p-phenylene diisocyanates, bitolylene diisocyanate, cyclohexane diisocyanate, bis-(isocyanatomethyl)cyclohexane, dicyclohexyl methane diisocyanate, dimer acid diisocyanate, trimethyl hexamethylene diisocyanate, lysine diisocyanate and its methyl ester, isophorone diisocyanate, methyl cyclohexane diisocyanate, 1,5-naphthalene diisocyanate, xylylene diisocyanate, xylene diisocyanate, methyl derivatives of xylylene diisocyanate, methyl derivatives of xylene diisocyanate, polymethylene polyphenyl isocyanate, chlorophenylene-2,4-diisocyanate, polyphenylene diisocyanate, isophorone diisocyanate, hydrogenated methylene diphenyl isocyanate (HMDI), tetramethyl xylene diisocyanate (TMXDI), hexamethylene diisocyanate (HDI), HDMI oligomer, TMXDI oligomer, HDI oligomer, biuret of HDI and combinations thereof.

12. The adhesive of claim 1, further comprising one or more of a catalyst, a polymerization control agent, an inhibitor, an antioxidant, a wetting agents, an adhesion promoter or a filler.

## Patentansprüche

1. Ein Zweikomponenten-Laminierklebstoff umfassend
(i) ein Prepolymer, das
- ein Polyetherpolyol mit niedrigerem Molekulargewicht mit einem Molekulargewicht zwischen 2.500 g/mol und 3.250 g/mol und
- einem Polyetherpolyol mit höherem Molekulargewicht mit einem Molekulargewicht, das mindestens 1000 g/mol höher ist als das Molekulargewicht des Polyols mit niedrigerem Molekulargewicht,
umfasst, und
(ii) ein Härtungsmittel, das ein isocyanatreaktives Material umfasst,
wobei der Klebstoff kein Lösungsmittel umfasst.

2. Der Klebstoff gemäß Anspruch 1, wobei das Molekulargewicht des Polyols mit höherem Molekulargewicht mindestens 2.000 g/mol höher ist als das Molekulargewicht des Polyols mit niedrigerem Molekulargewicht.

3. Der Klebstoff gemäß Anspruch 1, wobei das Molekulargewicht des Polyols mit niedrigerem Molekulargewicht 3.000 g/mol oder weniger und das Molekulargewicht des Polyols mit höherem Molekulargewicht mindestens 5.000 g/mol ist.

4. Der Klebstoff gemäß Anspruch 1, wobei das Polyetherpolyol ausgewählt wird aus der Gruppe bestehend aus Polypropylenoxid, Polypropylenglykol und Kombinationen davon besteht.

5. Der Klebstoff gemäß Anspruch 1, wobei das Prepolymer ferner Isocyanat enthält.

6. Der Klebstoff gemäß Anspruch 5, wobei das Isocyanat ausgewählt wird aus der Gruppe bestehend aus Hexamethylendiisocyanat, Toluoldiisocyanat, Diphenylmethandiisocyanat, Allophonat-modifiziertem Diphenylmethandiisocyanat, mund p-Phenylendiisocyanaten, Bitolylendiisocyanat, Cyclohexandiisocyanat, Bis-(isocyanatomethyl)cyclohexan, Dicyclohexylmethandiisocyanat, Dimersäurediisocyanat, Trimethylhexamethylendiisocyanat, Lysindiisocyanat und dessen Methylester, Isophorondiisocyanat, Methylcyclohexandiisocyanat, 1,5-Naphthalindiisocyanat, Xylylendiisocyanat, Xyloldiisocyanat, Methylderivate von Xylylendiisocyanat, Methylderivate von Xyloldiisocyanat, Polymethylenpolyphenylisocyanat, Chlorphenylen-2,4-diisocyanat, Polyphenylendiisocyanat, Isophorondiisocyanat, hydriertes Methylendiphenylisocyanat (HMDI), Tetramethylxyloldiisocyanat (TMXDI), Hexamethylendiisocyanat (HDI), HDMI-Oligomer, TMXDI-Oligomer, HDI-Oligomer, Biuret von HDI und deren Kombinationen.

7. Der Klebstoff gemäß Anspruch 1, wobei das isocyanatreaktive Material ausgewählt wird aus der Gruppe bestehend aus einem Polyhydroxyl, einem Polythiol und einem Polyamin besteht.

8. Der Klebstoff gemäß Anspruch 1, wobei das isocyanatreaktive Material ein Polyetherpolyol umfasst.

9. Der Klebstoff gemäß Anspruch 8, wobei das Polyetherpolyol ein Polyethertriol ist.

10. Der Klebstoff gemäß Anspruch 1, wobei das Härtungsmittel ferner ein Isocyanat enthält.

11. Der Klebstoff gemäß Anspruch 10, wobei das Isocyanat ausgewählt wird aus der Gruppe bestehend aus Hexamethylendiisocyanat, Toluoldiisocyanat, Diphenylmethandiisocyanat, Allophonat-modifiziertem Diphenylmethandiisocyanat, mund p-Phenylendiisocyanaten, Bitolylendiisocyanat, Cyclohexandiisocyanat, Bis-(isocyanatomethyl)cyclohexan, Dicyclohexylmethandiisocyanat, Dimersäurediisocyanat, Trimethylhexamethylendiisocyanat, Lysindiisocyanat und dessen Methylester, Isophorondiisocyanat, Methylcyclohexandiisocyanat, 1,5-Naphthalindiisocyanat, Xylylendiisocyanat, Xyloldiisocyanat, Methylderivate von Xylylendiisocyanat, Methylderivate von Xyloldiisocyanat, Polymethylenpolyphenylisocyanat, Chlorphenylen-2,4-diisocyanat, Polyphenylendiisocyanat, Isophorondiisocyanat, hydriertes Methylendiphenylisocyanat (HMDI), Tetramethylxyloldiisocyanat (TMXDI), Hexamethylendiisocyanat (HDI), HDMI-Oligomer, TMXDI-Oligomer, HDI-Oligomer, Biuret von HDI und Kombinationen davon.

12. Der Klebstoff gemäß Anspruch 1, wobei der Klebstoff ferner einen oder mehrere von einem Katalysator, einem Polymerisationskontrollmittel, einem Inhibitor, einem Antioxidationsmittel, einem Benetzungsmittel, einem Haftvermittler oder einem Füllstoff umfasst.

## Revendications

1. Adhésif de stratification à deux composants comprenant
(i) un prépolymère qui comprend
- un polyéther polyol à poids moléculaire plus bas possédant un poids moléculaire compris entre 2 500 g/mole et 3 250 g/mole et
- un polyéther polyol à poids moléculaire plus élevé possédant un poids moléculaire au moins 1 000 g/mole plus élevé que le poids moléculaire du polyol à poids moléculaire plus bas et
(ii) un agent de durcissement comprenant un matériau réactif envers isocyanate,
l'adhésif ne comprenant pas de solvant.

2. Adhésif selon la revendication 1, le poids moléculaire du polyol à poids moléculaire plus élevé étant au moins 2 000 g/mole plus élevé que le poids moléculaire du polyol à poids moléculaire plus bas.

3. Adhésif selon la revendication 1, le poids moléculaire du polyol à poids moléculaire plus bas étant de 3 000 g/mole ou moins et le poids moléculaire du polyol à poids moléculaire plus élevé étant d'au moins 5 000 g/mole.

4. Adhésif selon la revendication 1, le polyéther polyol étant choisi dans le groupe constitué par un poly(oxyde de propylène), un polypropylèneglycol et des combinaisons correspondantes.

5. Adhésif selon la revendication 1, le prépolymère comprenant en outre un isocyanate.

6. Adhésif selon la revendication 5, l'isocyanate étant choisi dans le groupe constitué par un diisocyanate d'hexamethylène, un diisocyanate de toluène, un diisocyanate de diphénylméthane, un diisocyanate de diphénylméthane modifié par allophanate, des diisocyanate de m-phénylène et de p-phénylène, un diisocyanate de bitolylène, un diisocyanate de cyclohexane, un bis-(isocyanatométhyl)cyclohexane, un diisocyanate de dicyclohexylméthane, un diisocyanate d'acide de dimère, un diisocyanate de triméthylhexamethylène, un diisocyanate de lysine et son ester méthylique, un diisocyanate d'isophorone, un diisocyanate de méthylcyclohexane, le 1,5-diisocyanate de naphtalène, un diisocyanate de xylylène, un diisocyanate de xylène, des dérivés méthyliques de diisocyanate de xylylène, des dérivés méthyliques de diisocyanate de xylène, un isocyanate de polyméthylène polyphényle, le 2,4-diisocyanate de chlorophénylène, un diisocyanate de polyphénylène, un diisocyanate d'isophorone, un isocyanate de diphénylméthylène hydrogéné (HMDI), un diisocyanate de tétraméthylxylène (TMXDI), un diisocyanate d'hexamethylène (HDI), un oligomère d'HDMI, un oligomère de TMXDI, un oligomère d'HDI, un biuret d'HDI et des combinaisons correspondantes.

7. Adhésif selon la revendication 1, le matériau réactif envers isocyanate étant choisi dans le groupe constitué par un polyhydroxyle, un polythiol et une polyamine.

8. Adhésif selon la revendication 1, le matériau réactif envers isocyanate comprenant un polyéther polyol.

9. Adhésif selon la revendication 8, le polyéther polyol étant un polyéther triol.

10. Adhésif selon la revendication 1, l'agent de durcissement comprenant en outre un isocyanate.

11. Adhésif selon la revendication 10, l'isocyanate étant choisi dans le groupe constitué par un diisocyanate d'hexamethylène, un diisocyanate de toluène, un diisocyanate de diphénylméthane, un diisocyanate de diphénylméthane modifié par allophanate, des diisocyanate de m-phénylène et de p-phénylène, un diisocyanate de bitolylène, un diisocyanate de cyclohexane, un bis-(isocyanatométhyl)cyclohexane, un diisocyanate de dicyclohexylméthane, un diisocyanate d'acide de dimère, un diisocyanate de triméthylhexamethylène, un diisocyanate de lysine et son ester méthylique, un diisocyanate d'isophorone, un diisocyanate de méthylcyclohexane, le 1,5-diisocyanate de naphtalène, un diisocyanate de xylylène, un diisocyanate de xylène, des dérivés méthyliques de diisocyanate de xylylène, des dérivés méthyliques de diisocyanate de xylène, un isocyanate de polyméthylène polyphényle, le 2,4-diisocyanate de chlorophénylène, un diisocyanate de polyphénylène, un diisocyanate d'isophorone , un isocyanate de diphénylméthylène hydrogéné (HMDI), un diisocyanate de tétraméthylxylène (TMXDI), un diisocyanate d'hexamethylène (HDI), un oligomère d'HDMI, un oligomère de TMXDI, un oligomère d'HDI, un biuret d'HDI et des combinaisons correspondantes.

12. Adhésif selon la revendication 1, comprenant en outre l'un ou plusieurs parmi un catalyseur, un agent de contrôle de polymérisation, un inhibiteur, un antioxydant, un agent mouillant, un promoteur d'adhérence et une charge.
